# EUROPEAN PATENT SPECIFICATION

(11) **EP 2 669 507 B1**
(45) Date of publication and mention of the grant of the patent: **25.11.2015**
(21) Application number: 12170512.3
(22) Date of filing: 01.06.2012
(51) Int. Cl.: B65D 85/68, F03D 1/00

(54) **Transportation and stacking of curved blades lying oppositely and above each other**
Transportieren und Stapeln von einander gegenüber und übereinander liegenden gebogenen Schaufeln
Transport et empilement de pales courbes s'étendant de manière opposée et au-dessus de l'autre

(43) Date of publication of application: 04.12.2013
(73) Proprietor: Siemens Aktiengesellschaft, 80333 München (DE)
(72) Inventor: Lieberknecht, Kim, 8200 Århus N (DK); Svinth, Kenneth Helligsoe, 7400 Herning (DK); Wieland, Maja Rose, 8220 Brabrand (DK)

(56) References cited:
- EP-A2- 2 239 459
- EP-A2- 2 330 291
- EP-A2- 2 333 315
- WO-A2-2010/105626

## Description

### Field of invention

The present invention relates to an arrangement for holding blades, in particular curved blades, for a wind turbine. Furthermore, the present invention relates to a transporting system for transporting blades, in particular for curved blades, for a wind turbine. Moreover, the present invention relates to a method of holding blades, in particular curved blades, for a wind turbine.

### Art Background

In modern wind turbines, wind turbine blades are pre-bended or curved in order to increase the aerodynamic efficiency. Pre-bended or curved blades take up more space than straight blades so that curved blades makes it difficult to utilize the space when stacking the blades during transportation.

US 6,983,844 B2 discloses a method for transporting a set of large blades for a wind turbine. Two wind turbine blades are stacked opposed to each other, wherein a first root end of a first wind turbine blade and a second tip end of a second blade are fixed to a first end frame. A first tip end of the first blade and a second root end of the second blade are fixed to a second end frame. Hence, the first blade and the second blade are stacked opposed to each other to respective root end frames. Due to the length of the large blade, the stability during transportation by holding the respective blades at the respective tip ends and root ends is critical.

EP 2 239 459 A2 discloses a transport system for a spar, such as a blade of a wind turbine. The transport system comprises a front main frame structure to which a root end of a spar is mounted. Furthermore, a back main frame structure is placed which holds a root end of a further spar. The spar and the further spar are fixed together by a centrally located centre frame structure.

WO 2010/105626 A2 discloses a wind turbine blade transport casing. A wind turbine blade may be held within a first and second transport casing. The casings may be attached on top of each other, for example.

EP 2 330 291 A2 discloses a system and a method for arranging wind turbine blades. The system comprises first and second root cradles for holding root ends of the turbine blades and first and second tip cradles for holding blade tips of the respective blades. The tip cradles are fixed by a pillar to a respective root cradle.

EP 2 333 315 A2 discloses a system and a method for arranging wind turbine blades. A system comprises first and second root cradles and respective tip cradles for holding tip ends of respective blades.

### Summary of the Invention

It is an object of the present invention to provide a holding arrangement for blades, which provides a high stability for the blades during transportation.

This object may be solved by an arrangement for holding blades, in particular curved blades, for a wind turbine, by a transporting system for transporting blades, in particular curved blades for a wind turbine and by a method of holding blades, in particular curved blades, for a wind turbine according to the independent claims.

According to a first aspect of the present invention, an arrangement for holding blades, in particular curved blades, for a wind turbine is presented. The arrangement comprises a first end frame for holding a first root end of the first blade and a first center frame for holding a first center section of the first blade. The first end frame is formed for being coupled to a supporting base. The first center section is spaced from a first tip end of the first blade, wherein the first center frame is formed for being coupled to the supporting base. A second end frame for holding a second root end of the second blade is formed for being coupled to the supporting base. Furthermore, the arrangement comprises a second center frame for holding a second center section of the second blade, wherein the second center section is spaced from a second tip end of the second blade. The second center frame is coupled to the first center frame such that the second center frame is coupled to the supporting base by the first center section. The first end frame is further formed such that the second tip end of the second blade is coupleable to the first end frame. The second end frame is further formed such that the first tip end of the first blade is coupleable to the second end frame. In particular, the first tip end may be further coupled to the second end frame and the second tip end may be coupled to the first end frame.

According to a further aspect of the present invention, a method of holding blades, in particular curved blades, for a wind turbine is presented. According to the method, a first root end of the first blade is coupled to a first end frame for holding the first root end. The first end frame is formed for being coupled to a supporting base. A first center section of the first blade is coupled to a first center frame for holding the first center section. The first center section is spaced from a first tip end of the first blade, wherein the first center frame is formed for being coupled to the supporting base. A second end frame for holding a second root end of the second blade is formed for being coupled to the supporting base. Furthermore, a second center frame for holding a second center section of the second blade is spaced from a second tip end of the second blade. The second center frame is coupled to the first center frame such that the second center frame is coupled to the supporting base by the first center section. The first end frame is further formed such that the second tip end of the second blade is coupleable to the first end frame. The second end frame is further formed such that the first tip end of the first blade is coupleable to the second end frame. In particular, the first tip end may be further coupled to the second end frame and the second tip end may be coupled to the first end frame.

A blade for a wind turbine comprises a length between a root end of the blade and a tip end of the blade. The blade comprises an aerodynamical profile which comprises a leading edge and a trailing edge. In operation of the blade, the air streams against the leading edge and streams away from the blade at the trailing edge. An imaginary straight line which connects the leading edge and the trailing edge is denoted as the chord line.

Furthermore, the blades may be pre-bended and may form a curved shape along its length extension. At the root end a blade comprises a generally circular cross-section which defines a cross-sectional plane. At a center point of the cross-section at the root end a connection line runs along a normal of the cross-sectional plane. A center point at the cross-section of the tip end lies onto the connection line which connects the center point of the root end and the center point of the tip end. The connection line is curved for a curved blade.

The center point at the tip end of a curved blade comprises an offset to an imaginary straight line running along the normal of the cross-sectional area at the root end and running through the center point of the root end. In other words, the connection line between the center point of the root end cross-section and the center point of a tip end cross-section is curved.

The first end frame may comprise a plurality of beams for forming a rigid frame. To the first end frame brackets may be attached for holding the first root end of the first blade. The first root end may in particular be detachably coupled to the first end frame.

The center frame comprises a plurality of beams for forming a rigid frame for holding the first center section of the first blade in such a way that the first center section of the blade is spaced from the first tip end of the first blade and the first root end of the first blade. In particular, the center section is spaced from the root end frame and is located within an interval between approximately one third to approximately two third of the length (i.e. the connection line) of the total length of the first blade between the root end and the tip end of the first blade. The centre frame may comprise brackets for holding the centre section. The first blade may be fixed to the first end frame and/or the first center frame by the bracket, by a strap and/or by a wire.

In particular, a curved blade may extend from the root end parallel to the normal of the cross-sectional plane at the root end in a straight way. After the center section is passed in direction to the tip end, the curving of the blade is initiated so that the connection line may not longer run straight and parallel to the normal of the cross-sectional plane of the root end but runs along a curved line. Furthermore, the curved blade may also comprise a curvature from the root end to the tip end, for example. Hence, the connection line may run curved between the root end and the tip end of a respective blade. The center section may be defined between an area between the root end of the blade and the (centre) section, where the curving of the blade is initiated. Hence, if the center frame holds the first center section of the first blade where the center line of the blade is still parallel to the normal of the cross-sectional area of the root end, a proper attaching of the center frame to the center section is achieved.

Furthermore, if the center frame is attached to the blade at the center section (e.g. where the blade runs still straight along a straight line parallel to the normal of the cross-sectional plane at the root end) a proper stacking of further second center frames is achieved such that a better space saving stacking of a plurality of blades is achieved. In particular, the centre frame may be attached in line with the respective end frame.

Furthermore, the center of gravity of a blade is located closer to the root end than to the tip end of the blade. Hence, by attaching the center frame to the center section for holding the blade, a bending of the blade during transportation due to its own weight is reduced. Hence, a more stable and comfortable transportation of the blades is achieved.

According to a further exemplary embodiment, the first center frame comprises an open profile, in particular a U-shaped profile, with an open side such that the first blade is insertable through the open side into the open profile such that the open profile partially surrounds the first blade.

According to a further exemplary embodiment, the first end frame and the first center frame are coupleable to the supporting base such that a direction of a first chord line of the first profile of the center section of the first blade is aligned parallel along an upper surface of the supporting base. In particular, the chord line at the centre section may extend for example along a (generally) horizontal direction.

According to a further exemplary embodiment, the first end frame and the first center frame are coupleable to the supporting base such that the direction of the first chord line of the first profile of the first center section of the first blade is alignable perpendicular with respect to an upper surface of the supporting base. In particular, the chord line at the centre section may extend for example along a (generally) horizontal direction.

In particular, the center frame and the end frame may be formed in such a way, that both frames may be coupled to the supporting base with a first orientation which is parallel to the upper surface of the supporting base and may be further coupled to the supporting base with a second orientation which is perpendicular to the upper surface of the supporting base. Hence, the blade may be coupled to the supporting base selectively in such a way that the blade and its chord line is alignable either perpendicular or parallel to the upper surface of the supporting base (i.e. along the vertical direction or the horizontal direction).

In other words, the first center frame and the first end frame may be rotated with respect to the supporting base such that a horizontal or a vertical alignment of the chord line of the blade is adjustable.

According to a further exemplary embodiment, the first center frame comprises a carrying element. The carrying element is formed such that the first center frame stands on the supporting base. The carrying element may comprise one or a plurality of standing foots, for example. Furthermore, the carrying element may comprise wheel devices, such that the first center frame is rollable along the supporting base. If the root end is fixed to the end frame and the centre section is fixed to the centre frame, a height difference between the distance of the supporting base and the root end on the one side and the supporting base and the centre section on the other side may be overcome by the carrying element.

The second blade may have a straight or a curved shape. In particular, the second blade may have the same shape as the first blade. The second end frame may be identically formed and designed as the first end frame.

The second center frame couples the second center section of the second blade. The second center frame is coupled to the first center frame and is thus indirectly coupled to the supporting base. In particular, the second center frame is coupled above the first center frame.

Hence, by the above-described exemplary embodiment, the second blade is held to the arrangement above the first blade. Furthermore, the second blade is orientated oppositely with respect to the first blade, which means that the second tip end is located close to the first end frame and the first tip end is located close to the second end frame.

Hence, by the above-described exemplary embodiment, the arrangement is adapted for stacking two symmetrical and identically shaped blades above each other, wherein the connection lines connecting the respective root ends and tip ends of the respective first and second blades are parallel with respect to each other. The connection lines are the (straight or curved) lines which connect the center point at the cross-section at the root end with a center point at the cross-section at the tip end of the respective blade.

According to a further exemplary embodiment, a transporting system for transporting blades, in particular curved blades, for a wind turbine, is presented. The transporting system comprises the arrangement as described above for holding blades and a transporting device comprising the supporting base. The arrangement is detachably coupled to the supporting base.

The transport device may be for example a truck, a cargo ship or a train.

Because the arrangement and in particular the end frames and the first center frame are detachably coupled to the supporting base, the arrangement may be used along the entire supply chain. In particular, between the transportation from the factory to the site of operation, the respective end frames and center frames may rest on the blade to be held. Between the transport devices, e.g. between a transportation by truck, by ship or by train, the blades have not to be detached from the respective frames because the frames may be carried over from one transportation device to the other transportation device together with the respective blades.

By the present invention, in particular an efficient curved blade transportation and stacking arrangement is achieved. The curved blades (first blade and second blade) are held with a respective root end frame and a respective center frame in such a way, that the curved blades may be placed oppositely against and above each other, whereby the first center frame and the second are coupled to each other and are aligned above each other.

Furthermore, by the present invention it is also possible to transport more blades within the same space due to applying the arrangement for supporting the curved blades at the center sections. Hence, the total length of a curved blade stack by the above-described arrangement is reduced in comparison to conventional stacking arrangements as the length of the stack as described by the present invention is substantially of the same length as of a respective curved blade. Hence, it is possible to transport more curved blade stacks on a ship which makes also the transportation cheaper. Due to the alignment of the chord lines of the blades to be held along the vertical and/or the horizontal direction, the width or the height of the stack is reducible depending on the needs of the respective transportation device.

Furthermore, a blade tip protection may be attached to a respective tip end of a blade. The blade tip protection may comprise polystyrene or foam protection means. Furthermore, damping means may be attached to the tip end protection means for stabilizing the tip end during transportation.

In particular, during transportation between the factory and the site of operation of the wind turbine, the first blade and the second blade may be mounted together two and two and may be transported and moved together all the way.

### Brief Description of the Drawings

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.
Fig. 1 shows an arrangement for holding blades according to an exemplary embodiment of the present invention, wherein the chord line of a centre section of a blade is aligned along a generally vertical direction;
Fig. 2 shows an arrangement for holding blades according to an exemplary embodiment of the present invention, wherein the chord line of a centre section of a blade is aligned along a generally horizontal direction;
Fig. 3 shows an arrangement for holding two blades according to an exemplary embodiment of the present invention;
Fig. 4 shows a transporting arrangement for transporting blades according to an exemplary embodiment of the present invention;
Fig. 5 shows a stack of four blades above each other according to an exemplary embodiment of the present invention; and
Fig. 6 shows a transporting arrangement for transporting blades on a ship.

### Detailed Description

The illustrations in the drawings are schematical. It is noted that in different figures, similar or identical elements are provided with the same reference signs.

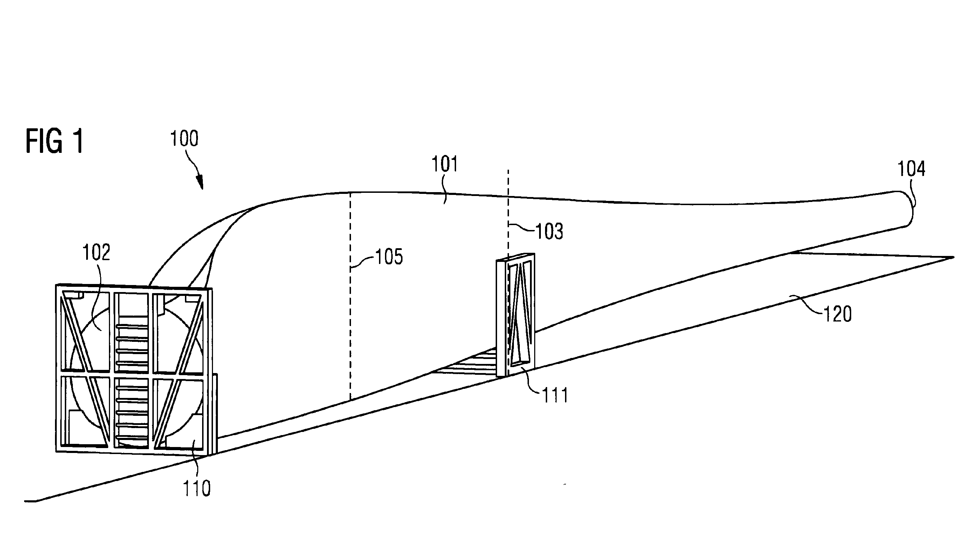

**Fig. 1** shows an arrangement 100 for holding blades, in particular curved blades, for a wind turbine. The arrangement 100 comprises a first end frame 110 for holding a first root end 102 of a first blade 101. Furthermore, the arrangement 100 comprises a first center frame 111 for holding a first center section 103 of the first blade 101. The first end frame 110 is formed for being coupled to a supporting base 120. The first end frame 110 comprises a bracket or other fixing means for fixing and holding the first root end 102 of the first blade 101.

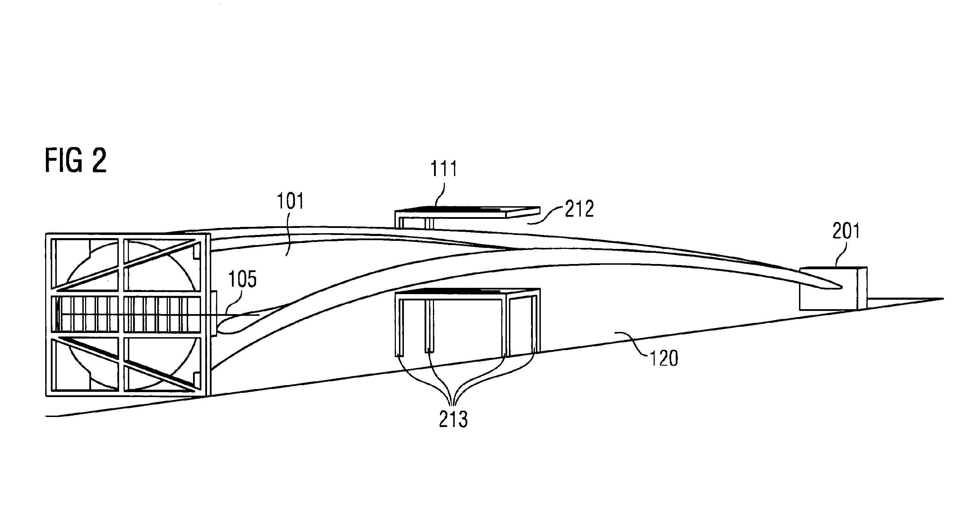

The first center frame 111 comprises a U-shaped profile which comprises an open side 212 (see Fig. 2) through which the first blade 101 is insertable. The first center frame 111 is coupleable to the supporting base 120.

The first blade 101 comprises an aerodynamic profile comprising a leading edge and a trailing edge. Moreover, the first blade 101 comprises a span width defining the length between the first root end 102 and the first tip end 104 of the first blade 101. A chord line 105 is an imaginary straight line which connects the leading edge and the trailing edge. As can be taken from Fig. 1, the first end frame 110 and the first center frame 111 hold the first blade 101 in such a way that the first chord line 105 (e.g. at the root end 102 and/or the first centre section 103) is aligned generally perpendicular (vertically) along an upper surface of the supporting base.

The first center section 103 of the first blade 101 may be a section of the first blade 101 which is spaced from the first tip end 104 and the first root end 102. In particular, as can be taken from Fig. 1, the first center section 103 is defined at an approximately half length of the span width of the first blade 101. In particular, the center of gravity of the first blade 101 is located closer to the centre frame 111 than to a tip end frame (not shown).

**Fig. 2** shows an arrangement 100 for holding blades. The arrangement 100 shown in Fig. 2 comprises the same features as the arrangement 100 as shown in Fig. 1. In contrast to the embodiment as shown in Fig. 1, the arrangement 100 shown in Fig. 2 holds the first blade 101 in such a way that the first chord line 105 of the first profile of the first center section 103 of the first blade 101 is aligned approximately parallel to the upper surface of the supporting base 120 (e.g. along an horizontal direction).

As can be taken from Fig. 2, the first end frame 110 comprises a four-sided surrounding frame, wherein each side of the frame may be abutted onto the supporting base 120. Hence, the first end frame 110 may be simply rotated around 90° so that the first blade 110 and its first chord line 105, respectively, is also simply rotated around 90°.

Also the first center frame 111 may be rotated around 90° together with the first blade 110. In particular, if the blade 110 is a curved blade, the center frame 111 may not longer directly abut onto the supporting base 120. However, a carrying element may be applied which comprises standing foots 213 such that the first center frame 111 stands on the supporting base 120.

In order to protect the tip end 104 of the first blade 101, a tip end cover 201 may be attached to the first tip end 104.

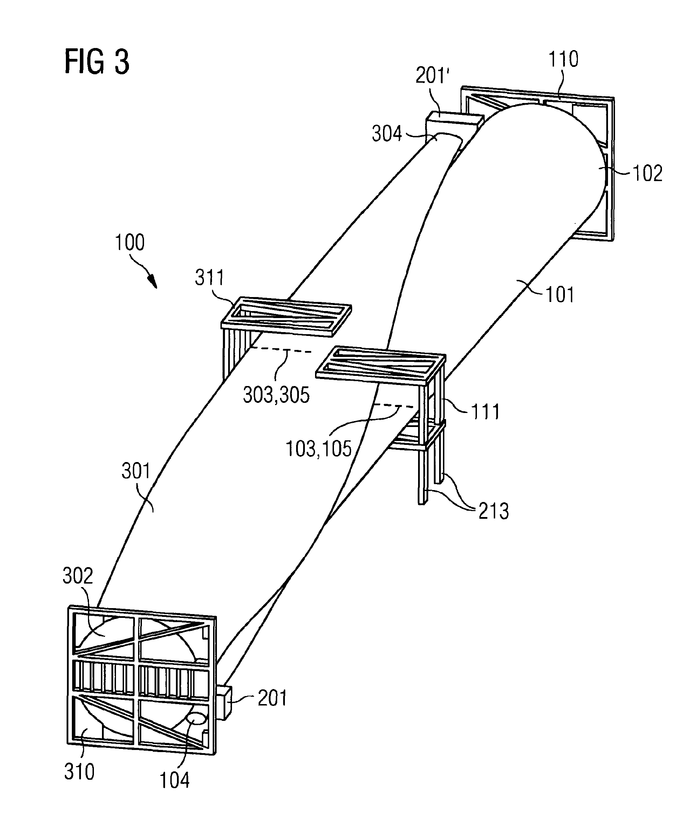

**Fig. 3** shows an arrangement 100 which holds the first blade 101 and a second blade 301.

The first blade 101 and the second blade 301 are curved blades. The second blade 301 may comprise the same shape and the same features as the first blade 101. The second blade 301 comprises a second root end 302, a second center section 303 and a second tip end 304. Furthermore, in Fig. 3, a second chord line 305 (e.g. at the second root end 302 and/or the second centre section 303) which connects the leading edge with the trailing edge of the second blade 301 is shown. The first blade 101 shown in Fig. 3 is coupled with its first root end 102 to the first end frame 110.

The first center section 103 of the first blade 101 is fixed to the first center frame 111. The first center frame 111 stands with standing foots 213 of a carrying element on the supporting base 120, for example. The first tip end 104 is covered by a tip end cover 201.

The second root end 302 of the second blade 301 is coupled to a second end frame 310. The second end frame 310 may have the same shape and features as the first end frame 110, for example.

The second center section 303 of the second blade 301 is fixed to a second center frame 311. The second center frame 311 may comprise an open profile with an open side.

The second center frame 311 abuts onto the first center frame 111. The second center frame 311 may be detachably coupled and fixed to the first center frame 111.

The first center frame 111 and the second center frame 311 may be aligned to each other in such a way that the orientation of the first open profile of the first center frame 111 is oppositely orientated with respect to the second open profile of the second center frame 311. As can be taken in Fig. 3, the first center frame 111 and the second center frame 311 may form together an S-shaped profile, for example.

The second blade 301 is held by the second end frame 310 and the second center frame 311 in such a way that the second blade 301 is held above the first blade 101.

Furthermore, the first end frame 110 may be formed such that the second tip end 304 of the second blade 301 is fixable. Additionally, the second end frame 310 is further formed such that the first tip end 104 of the first blade 101 is fixable to the second end frame 310.

As can be taken from Fig. 3, the first end frame 110, the first center frame 111, the second end frame 310 and the second center frame 311 are aligned such that the first blade 101 and the second blade 301 are held in such a way that its chord lines 105, 305 are aligned along a generally horizontal direction. Hence, a very flat stacking of the blades 101, 301 is achieved.

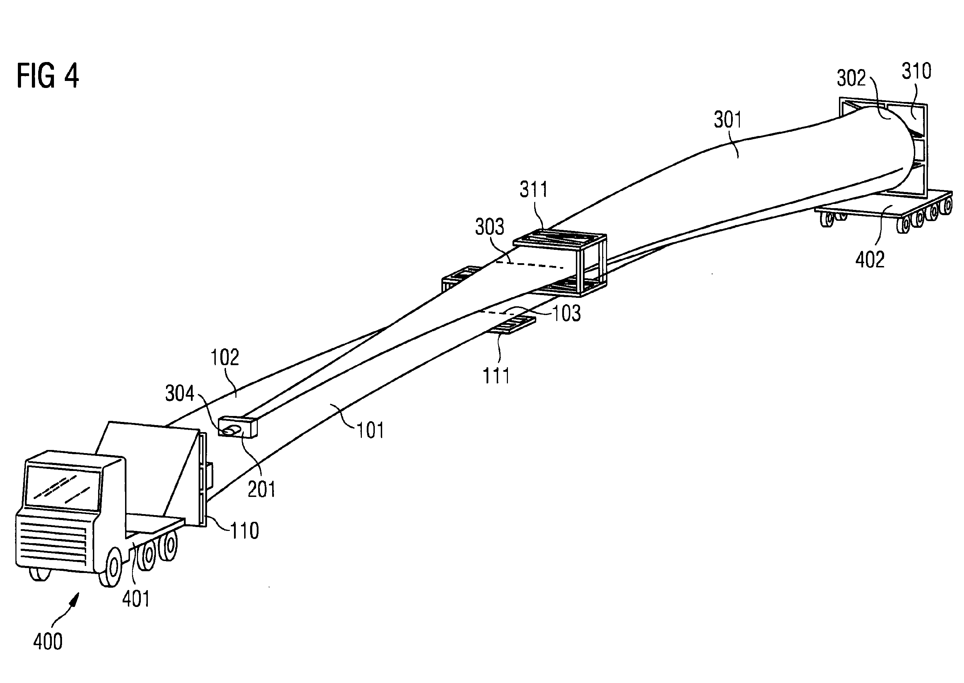

**Fig. 4** shows a transporting truck 400 as a transporting device for a transporting system. The transporting truck 400 comprises a first supporting base part 401 of the supporting base 120 and a further supporting base part 402 of the supporting base 120. The further supporting base part 402 may be for example a trailer which is coupled to the transporting truck 400 by the blades 101, 301 to be transported.

The first blade 101 and the second blade 301 are held together by the arrangement 100 as shown in Fig. 3. Furthermore, the first center frame 111 and the second center frame 311 form a rigid and bend-proof arrangement, such that the blades 101, 301 will not be bended differently with respect to each other during transportation such that its center sections 103, 303 do not contact the ground, for example. The first centre frame 111 is hence indirectly coupled to one of the supporting base parts 401, 402 via the respective blades 101, 301.

Dependent on the space requirements during transportation, the end frames 110, 310 and center frames 111, 311 may be aligned in such a way that the chord lines 105, 305 (e.g. at the respective root ends 102, 302 and/or the respective centre sections 103, 303) are aligned along a generally horizontal direction (relatively flat stacking) or an approximately vertical direction (for reducing the width of the transporting system).

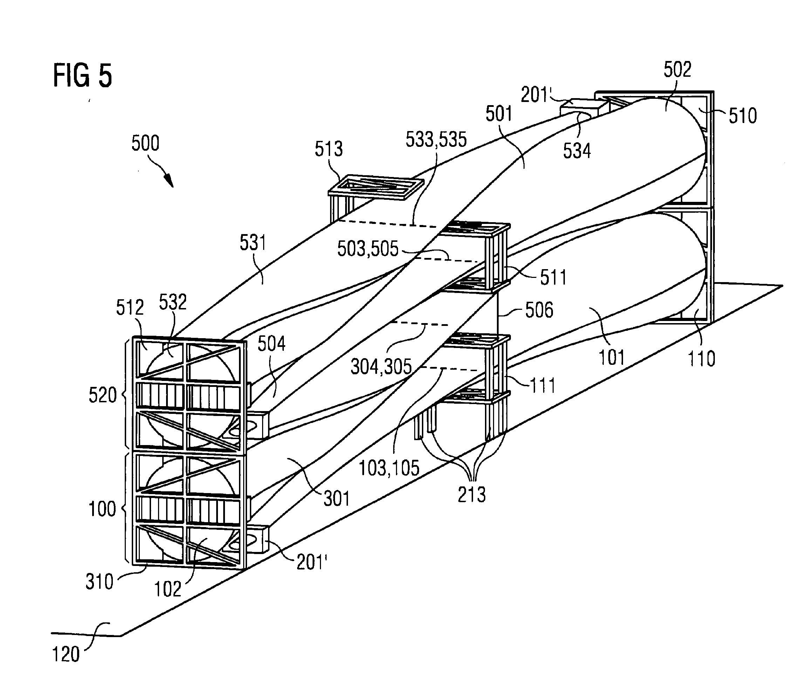

**Fig. 5** shows a blade stack 500 comprising the arrangement 100 according to the present invention. As shown in Fig. 5, four (e.g. identically shaped) blades 101, 301, 501 and 531 are stacked above each other along a vertical direction.

The first blade 101 and the second blade 301 are held by the respective end frames 110, 310 and center frames 111, 311 as shown in Fig. 3. Above the arrangement 100 a further arrangement 520, as shown in Fig. 3, may be attached above the arrangement 100. The further arrangement 520 comprises a third end frame 510, a third center frame 511, a fourth center frame 513 and a fourth end frame 512. To the third end frame 510 a third root end 502 of the third blade 501 is attached.

A third center section 503 of the third blade 501 is attached to the third center frame 511. A third tip end 504 forms a free end of the third blade 501. The third blade 501 runs below the fourth blade 531. A fourth root end 532 is fixed to the fourth end frame 512 and a fourth center section 533 is fixed to a fourth center frame 513. A fourth tip end 534 forms a free end of the fourth blade 531.

The fourth chord line 535 at the fourth center section 533 and the third chord line 505 at the third center section 503 are generally aligned along a horizontal direction.

In order to provide a more robust arrangement 100, 520, the open profile of the center sections 111, 311, 511, 513 may be closed at its open sides with a respective support bar 506. Hence, the weight force may additionally transferred by the support bar 506 to the supporting base 120.

The blade stack 500 may comprise a plurality of arrangements 100, 520 which are attached above each other or besides each other along a horizontal direction.

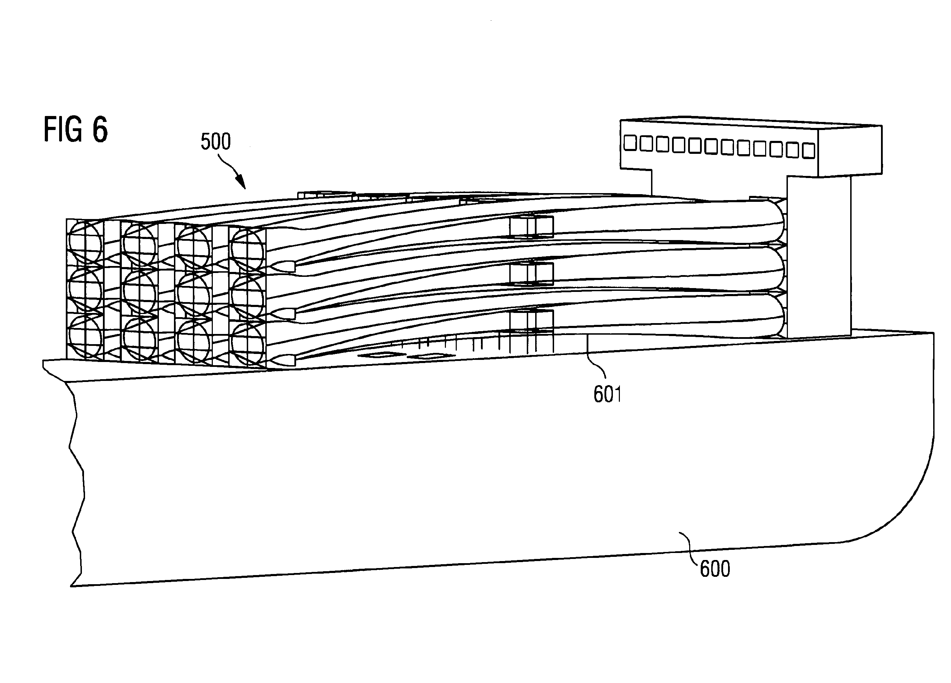

**Fig. 6** shows a transporting system with a transport ship 600 as a transport device. Onto the ship supporting base 601, a plurality of blade stacks 500 as shown in Fig. 5 may be transported. As shown in Fig. 6, due to the above-described stacking arrangement 100, 520, the curved blades 101, 301, 501, 531 may be packed in a very space-saving manner.

It should be noted that the term "comprising" does not exclude other elements or steps and "a" or "an" does not exclude a plurality. Also elements described in association with different embodiments may be combined. It should also be noted that reference signs in the claims should not be construed as limiting the scope of the claims.

## Claims

1. Arrangement (100) for holding blades, in particular curved blades, for a wind turbine, the arrangement (100) comprising
a first end frame (110) for holding a first root end (102) of a first blade (101), wherein the first end frame (110) is formed for being coupled to a supporting base (120),
a first centre frame (111) for holding a first centre section (103) of the first blade (101) in such a way that the first centre section (103) is spaced from a first tip end (104) of the first blade (101),
wherein the first centre frame (111) is formed for being coupled to the supporting base (120),
a second end frame (310) for holding a second root end (302) of a second blade (301), wherein the second end frame (310) is formed for being coupled to the supporting base (120), and
a second centre frame (311) for holding a second centre section (303) of the second blade (301) in such a way that the second centre section (303) is spaced from a second tip end (304) of the second blade (301),
wherein the second centre frame (311) is formed for being coupled to the supporting base (120),
wherein the first end frame (110) is further formed such that the second tip end (304) of the second blade (301) is coupleable to the first end frame (110), and
wherein the second end frame (310) is further formed such that the first tip end (104) of the first blade (101) is coupleable to the second end frame (310).

2. Arrangement (100) according to claim 1,
wherein the first centre frame (111) comprises an open profile, in particular a U-shape profile, with an open side (212) such that the first blade (101) is inserable through the open side (212) into the open profile such that the open profile partially surrounds the first blade (101).

3. Arrangement (100) according to claim 1 or 2,
wherein the first end frame (110) and the first centre frame (111) are coupleable to the supporting base (120) such that a direction of a first chord line (105) of a first profile of the first centre section (103) of the first blade (101) is alignable parallel to an upper surface of the supporting base.

4. Arrangement (100) according to one of the claims 1 to 3,
wherein the first end frame (110) and the first centre frame (111) are coupleable to the supporting base (120) such that the direction of the first chord line (105) of the first profile of the first centre section (103) of the first blade (101) is alignable perpendicular with respect to an upper surface of the supporting base (120).

5. Arrangement (100) according to one of the claims 1 to 4,
wherein the first centre frame (111) comprises a carrying element, and
wherein the carrying element is formed such that the first centre frame (111) is coupleable to the supporting base (120).

6. Arrangement (100) according to one of the claims 1 to 5, wherein the second centre frame (311) is coupled to the first centre frame (111) such that the second centre frame (311) is coupled to the supporting base (120) by the first centre frame (311).

7. Arrangement (100) according to one of the claims 1 to 6,
wherein the second end frame (310) and the second centre frame (311) are coupleable to the supporting base (120) such that a second direction of a second chord line (305) of a second profile of the second centre section (303) of the second blade (301) is alignable parallel to an upper surface of the supporting base.

8. Arrangement (100) according to one of the claims 1 to 6,
wherein the second end frame (310) and the second centre frame (311) are coupleable to the second supporting base (120) such that the second direction of the second chord line (305) of the second profile of the second centre section (303) of the second blade (301) is alignable perpendicular to an upper surface of the supporting base.

9. Transporting system for transporting blades, in particular curved blades, for a wind turbine, the transporting system comprises
an arrangement (100) for holding blades according to one of the claims 1 to 8,
a transporting device comprising the supporting base (120), and
wherein the arrangement (100) is detachably coupled to the supporting base (120).

10. Method of holding blades, in particular curved blades, for a wind turbine, the method comprising
coupling a first root end (102) of a first blade (101) to a first end frame (110) for holding the first root end (102), wherein the first end frame (110) is formed for being coupled to a supporting base (120),
coupling a first centre section (103) of the first blade (101) to a first centre frame (111) for holding the first centre section (103) in such a way that the first centre section (103) is spaced from a first tip end (104) of the first blade (101), wherein the first centre frame (111) is formed for being coupled to the supporting base (120),
coupling a second root end (302) of a second blade (301) to a second end frame (310) for holding the second root end (302), wherein the second end frame (310) is formed for being coupled to the supporting base (120),
coupling a second centre section (303) of the second blade (301) to a second centre frame (311) for holding the second centre section (303) in such a way that the second centre section (303) is spaced from a second tip end (304) of the second blade (301),
wherein the second centre frame (311) is formed for being coupled to the supporting base (120),
coupling the second tip end (304) of the second blade (301) to the first end frame (110), and
coupling the first tip end (104) of the first blade (101) to the second end frame (310).

## Patentansprüche

1. Anordnung (100) zum Halten von Blättern, insbesondere gekrümmten Blättern, für eine Windenergieanlage, wobei die Anordnung (100) Folgendes umfasst:
einen ersten Endrahmen (110) zum Halten eines ersten Wurzelendes (102) eines ersten Blatts (101), wobei der erste Endrahmen (110) für das Ankoppeln an eine Aufnahme (120) ausgestaltet ist,
einen ersten mittleren Rahmen (111) zum Halten eines ersten mittleren Abschnitts (103) des ersten Blatts (101) auf eine solche Weise, dass sich der erste mittlere Abschnitt (103) in einem Abstand zu einem ersten Spitzenende (104) des ersten Blatts (101) befindet,
wobei der erste mittlere Rahmen (111) für das Ankoppeln an die Aufnahme (120) ausgestaltet ist,
einen zweiten Endrahmen (310) zum Halten eines zweiten Wurzelendes (302) eines zweiten Blatts (301), wobei der zweite Endrahmen (310) für das Ankoppeln an die Aufnahme (120) ausgestaltet ist, und
einen zweiten mittleren Rahmen (311) zum Halten eines zweiten mittleren Abschnitts (303) des zweiten Blatts (301) auf eine solche Weise, dass sich der zweite mittlere Abschnitt (303) in einem Abstand zu einem zweiten Spitzenende (304) des zweiten Blatts (301) befindet,
wobei der zweite mittlere Rahmen (311) für das Ankoppeln an die Aufnahme (120) ausgestaltet ist,
wobei der erste Endrahmen (110) ferner so ausgestaltet ist, dass sich das zweite Spitzenende (304) des zweiten Blatts (301) an den ersten Endrahmen (110) ankoppeln lässt, und
wobei der zweite Endrahmen (310) ferner so ausgestaltet ist, dass sich das erste Spitzenende (104) des ersten Blatts (101) an den zweiten Endrahmen (310) ankoppeln lässt.

2. Anordnung (100) nach Anspruch 1,
bei der der erste mittlere Rahmen (111) ein offenes Profil, insbesondere ein U-förmiges Profil, mit einer offenen Seite (212) umfasst, so dass sich das erste Blatt (101) durch die offene Seite (212) so in das offene Profil einführen lässt, dass das offene Profil das erste Blatt (101) teilweise umgibt.

3. Anordnung (100) nach Anspruch 1 oder 2,
bei der sich der erste Endrahmen (110) und der erste mittlere Rahmen (111) so an die Aufnahme (120) ankoppeln lassen, dass sich eine Richtung einer ersten Profilsehne (105) eines ersten Profils des ersten mittleren Abschnitts (103) des ersten Blatts (101) parallel zu einer oberen Fläche der Aufnahme ausrichten lässt.

4. Anordnung (100) nach einem der Ansprüche 1 bis 3,
bei der sich der erste Endrahmen (110) und der erste mittlere Rahmen (111) so an die Aufnahme (120) ankoppeln lassen, dass sich die Richtung der ersten Profilsehne (105) des ersten Profils des ersten mittleren Abschnitts (103) des ersten Blatts (101) senkrecht zu einer oberen Fläche der Aufnahme (120) ausrichten lässt.

5. Anordnung (100) nach einem der Ansprüche 1 bis 4,
bei der der erste mittlere Rahmen (111) ein tragendes Element umfasst und
bei der das tragende Element so ausgestaltet ist, dass sich der erste mittlere Rahmen (111) an die Aufnahme (120) ankoppeln lässt.

6. Anordnung (100) nach einem der Ansprüche 1 bis 5,
bei der der zweite mittlere Rahmen (311) so an den ersten mittleren Rahmen (111) angekoppelt ist, dass der zweite mittlere Rahmen (311) über den ersten mittleren Rahmen (311) an die Aufnahme (120) angekoppelt ist.

7. Anordnung (100) nach einem der Ansprüche 1 bis 6,
bei der sich der zweite Endrahmen (310) und der zweite mittlere Rahmen (311) so an die Aufnahme (120) ankoppeln lassen, dass sich eine zweite Richtung einer zweiten Profilsehne (305) eines zweiten Profils des zweiten mittleren Abschnitts (303) des zweiten Blatts (301) parallel zu einer oberen Fläche der Aufnahme ausrichten lässt.

8. Anordnung (100) nach einem der Ansprüche 1 bis 6,
bei der sich der zweite Endrahmen (310) und der zweite mittlere Rahmen (311) so an die zweite Aufnahme (120) ankoppeln lassen, dass sich die zweite Richtung der zweiten Profilsehne (305) des zweiten Profils des zweiten mittleren Abschnitts (303) des zweiten Blatts (301) senkrecht zu einer oberen Fläche der Aufnahme ausrichten lässt.

9. Transportsystem zum Transportieren von Blättern, insbesondere gekrümmten Blättern für eine Windenergieanlage, das Folgendes umfasst:
eine Anordnung (100) zum Halten von Blättern nach einem der Ansprüche 1 bis 8,
eine Transportvorrichtung mit der Aufnahme (120), und
wobei die Anordnung (100) lösbar an die Aufnahme (120) angekoppelt ist.

10. Verfahren zum Halten von Blättern, insbesondere gekrümmten Blättern, für eine Windenergieanlage, das Folgendes umfasst:
Ankoppeln eines ersten Wurzelendes (102) eines ersten Blatts (101) an einen ersten Endrahmen (110) zum Halten des ersten Wurzelendes (102), wobei der erste Endrahmen (110) für das Ankoppeln an eine Aufnahme (120) ausgestaltet ist,
Ankoppeln eines ersten mittleren Abschnitts (103) des ersten Blatts (101) auf eine solche Weise an einen ersten mittleren Rahmen (111) zum Halten des ersten mittleren Abschnitts (103), dass sich der erste mittlere Abschnitt (103) in einem Abstand zu einem ersten Spitzenende (104) des ersten Blatts (101) befindet, wobei der erste mittlere Rahmen (111) für das Ankoppeln an die Aufnahme (120) ausgestaltet ist,
Ankoppeln eines zweiten Wurzelendes (302) eines zweiten Blatts (301) an einen zweiten Endrahmen (310) zum Halten des zweiten Wurzelendes (302), wobei der zweite Endrahmen (310) für das Ankoppeln an die Aufnahme (120) ausgestaltet ist,
Ankoppeln eines zweiten mittleren Abschnitts (303) des zweiten Blatts (301) auf eine solche Weise an einen zweiten mittleren Rahmen (311) zum Halten des zweiten mittleren Abschnitts (303), dass sich der zweite mittlere Abschnitt (303) in einem Abstand zu einem zweiten Spitzenende (304) des zweiten Blatts (301) befindet,
wobei der zweite mittlere Rahmen (311) für das Ankoppeln an die Aufnahme (120) ausgestaltet ist,
Ankoppeln des zweiten Spitzenendes (304) des zweiten Blatts (301) an den ersten Endrahmen (110) und
Ankoppeln des ersten Spitzenendes (104) des ersten Blatts (101) an den zweiten Endrahmen (310).

## Revendications

1. Agencement (100) destiné à retenir des pales, en particulier des pales courbes, pour une éolienne, l'agencement (100) comprenant :
un premier cadre d'extrémité (110) destiné à retenir une première extrémité de fond (102) d'une première pale (101), le premier cadre d'extrémité (110) étant formé pour être couplé à une base support (120),
un premier cadre central (111) destiné à retenir une première section centrale (103) de la première pale (101) de telle sorte que la première section centrale (103) est espacée d'une première extrémité en bout (104) de la première pale (101),
dans lequel le premier cadre central (111) est formé pour être couplé à la base support (120),
un second cadre d'extrémité (310) destiné à retenir une seconde extrémité de fond (302) d'une seconde pale (301), dans lequel le second cadre d'extrémité (310) est formé pour être couplé à la base support (120), et
un second cadre central (311) destiné à retenir une seconde section centrale (303) de la seconde pale (301) de telle sorte que la seconde section centrale (303) est espacée d'une seconde extrémité en bout (304) de la seconde pale (301),
dans lequel le second cadre central (311) est formé pour être couplé à la base support (120),
dans lequel le premier cadre d'extrémité (110) est en outre formé de telle sorte que la seconde extrémité en bout (304) de la seconde pale (301) peut être couplée au premier cadre d'extrémité (110), et
dans lequel le second cadre d'extrémité (310) est en outre formé de telle sorte que la première extrémité en bout (104) de la première pale (101) peut être couplée au second cadre d'extrémité (310).

2. Agencement (100) selon la revendication 1,
dans lequel le premier cadre central (111) comprend un profil ouvert, en particulier un profil en forme de U, avec un côté ouvert (212) de telle sorte que la première pale (101) peut être insérée à travers le côté ouvert (212) dans le profil ouvert de telle sorte que le profil ouvert entoure partiellement la première pale (101).

3. Agencement (100) selon la revendication 1 ou 2,
dans lequel le premier cadre d'extrémité (110) et le premier cadre central (111) peuvent être couplés à la base support (120) de telle sorte qu'une direction d'une première ligne de corde (105) d'un premier profil de la première section centrale (103) de la première pale (101) peut être alignée parallèlement à une surface supérieure de la base support.

4. Agencement (100) selon une des revendications 1 à 3, dans lequel le premier cadre d'extrémité (110) et le premier cadre central (111) peuvent être couplés à la base support (120) de telle sorte que la direction de la première ligne de corde (105) du premier profil de la première section centrale (103) de la première pale (101) peut être alignée perpendiculairement par rapport à une surface supérieure de la base support (120).

5. Agencement (100) selon une des revendications 1 à 4,
dans lequel le premier cadre central (111) comprend un élément porteur, et
dans lequel l'élément porteur est formé de telle sorte que le premier cadre central (111) peut être couplé à la base support (120).

6. Agencement (100) selon une des revendications 1 à 5,
dans lequel le second cadre central (311) est couplé au premier cadre central (111) de telle sorte que le second cadre central (311) est couplé à la base support (120) par le premier cadre central (311).

7. Agencement (100) selon une des revendications 1 à 6,
dans lequel le second cadre d'extrémité (310) et le second cadre central (311) peuvent être couplés à la base support (120) de telle sorte qu'une seconde direction d'une seconde ligne de corde (305) d'un second profil de la seconde section centrale (303) de la seconde pale (301) peut être alignée parallèlement à une surface supérieure de la base support.

8. Agencement (100) selon une des revendications 1 à 6,
dans lequel le second cadre d'extrémité (310) et le second cadre central (311) peuvent être couplés à la seconde base support (120) de telle sorte que la seconde direction de la seconde ligne de corde (305) du second profil de la seconde section centrale (303) de la seconde pale (301) peut être alignée perpendiculairement à une surface supérieure de la base support.

9. Système de transport destiné à transporter des pales, en particulier des pales courbes, pour une éolienne, système de transport comprenant :
un agencement (100) destiné à retenir des pales selon une des revendications 1 à 8,
un dispositif de transport comprenant la base support (120), et
dans lequel l'agencement (100) peut être couplé de manière détachable à la base support (120).

10. Procédé destiné à retenir des pales, en particulier des pales courbes, pour une éolienne, procédé comprenant :
le couplage d'une première extrémité de fond (102) d'une première pale (101) à un premier cadre d'extrémité (110) pour retenir la première extrémité de fond (102), le premier cadre d'extrémité (110) étant formé pour être couplé à une base support (120),
le couplage d'une première section centrale (103) de la première pale (101) à un premier cadre central (111) pour retenir la première section centrale (103) de telle sorte que la première section centrale (103) est espacée d'une première extrémité en bout (104) de la première pale (101), le premier cadre central (111) étant formé pour être couplé à la base support (120),
le couplage d'une seconde extrémité de fond (302) d'une seconde pale (301) à un second cadre d'extrémité (310) pour retenir la seconde extrémité de fond (302), le second cadre d'extrémité (310) étant formé pour être couplé à la base support (120),
le couplage d'une seconde section centrale (303) de la seconde pale (301) à un second cadre central (311) pour retenir la seconde section centrale (303) de telle sorte que la seconde section centrale (303) est espacée d'une seconde extrémité en bout (304) de la
seconde pale (301),
dans lequel le second cadre central (311) est formé pour être couplé à la base support (120),
le couplage de la seconde extrémité en bout (304) de la seconde pale (301) au premier cadre d'extrémité (110), et
le couplage de la première extrémité en bout (104) de la première pale (101) au second cadre d'extrémité (310).
